# EUROPEAN PATENT SPECIFICATION

(11) **EP 0 857 968 B1**
(45) Date of publication and mention of the grant of the patent: **19.12.2001**
(21) Application number: 98100750.3
(22) Date of filing: 16.01.1998
(51) Int. Cl.: G01N 27/416, G01N 27/06

(54) **Apparatus for measuring dissolved oxygen and pH in a sample**
Vorrichtung zum Messen des Gehalts an gelöstem Sauerstoff und des pH-Wertes einer Probe
Appareil de mesure de la teneur en oxygène dissous et du pH d'un échantillon

(30) Priority: 31.01.1997 JP 3302697; 31.01.1997 JP 3302797
(43) Date of publication of application: 12.08.1998
(60) Divisional application: 99106113.6
(73) Proprietor: HORIBA, LTD., Minami-ku Kyoto (JP)
(72) Inventor: Tarui, Yoshihiro, Kissyoin, Minami-ku, Kyoto (JP); Mori, Takeshi, Kissyoin, Minami-ku, Kyoto (JP)
(74) Representative: Müller, Frithjof E., Dipl.-Ing.

(56) References cited:
- EP-A- 0 398 634
- US-A- 4 921 582
- US-A- 5 103 179
- US-A- 5 581 189
- CREASON S C ET AL: "Problems and solutions in pH measurement" ISA TRANSACTIONS, 1977, USA, vol. 16, no. 3, ISSN 0019-0578, pages 67-71, XP002064858

## Description

### BACKGROUND OF THE INVENTION

### Field of the Invention

The present invention relates to an apparatus for measuring dissolved oxygen and pH in a sample.

### Description of the Prior Art

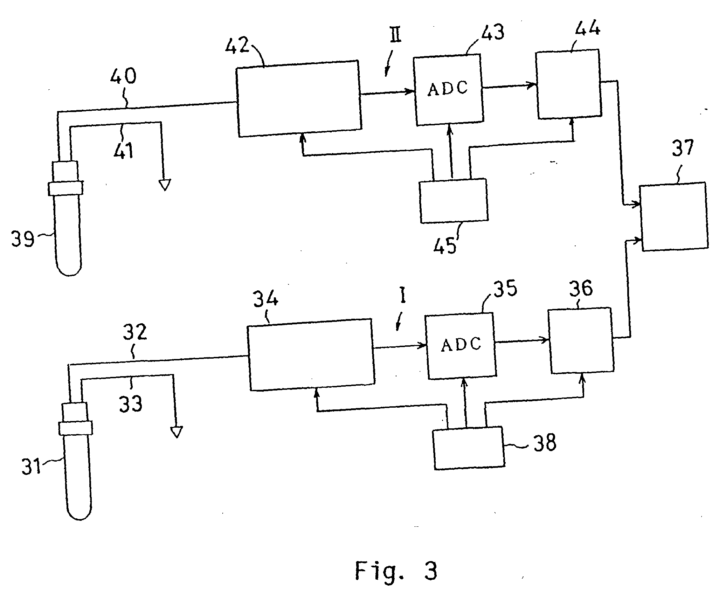

In an apparatus of this type, when at least two items of a dissolved oxygen probe, conductivity probe, and pH probe are immersed in the same sample, they exert interference and influences on each other, and this kind of apparatus has been configured as shown in Fig. 3 to Fig. 5.

That is, fig. 3 shows one example of the configuration of a conventional apparatus for measuring dissolved oxygen or pH, and in Fig. 3, numeral 31 designates a dissolved oxygen probe, to which two signal cables 32, 33 are connected. To one signal cable 32, a current-voltage converter circuit 34 is connected, and behind this circuit 34, an A/D converter circuit 35 is installed, and this circuit 35 is connected to a processor and display unit 37 via a photocoupler 36. Numeral 38 designates a power supply for driving the current-voltage converter circuit 34. A/D converter circuit 35.m and photocoupler 36, respectively. To the other signal cable 33, a reference potential is given.

Numeral 39 is a pH probe to which two signal cables 40, 41 are connected. To one signal cable 40, an impedance converter circuit 42 is connected, and behind this circuit 42, and A/D converter circuit 43 is installed, and this circuit 43 is connected to the processor and display unit 37 via a photocoupler. 44. Numeral 45 designates a power supply for driving the impedance converter circuit 42, A/D converter circuit 43, and the photocoupler 44, respectively. To the other signal cable 41, the reference potential is given.

In the configuration shown in FIG. 3, since a circuit I for measuring dissolved oxygen comprising the dissolved oxygen probe 31, signal cable 32, current-voltage converter circuit 34, A/D converter 35, etc. and a circuit II for measuring pH comprising the pH probe 39, signal cable 40, impedance converter circuit 42, A/D converter circuit 43, etc. are isolated in terms of signal by the photocouplers 36, 44, the pH probe 39 and the dissolved oxygen probe 31 are isolated from each other, and the said interference and influences can be eliminated.

However, in the configuration shown in FIG. 3 as above, not only A/D converter circuits 35, 43 but also power supplies 38, 45 isolated from each other must be installed to the dissolved oxygen measuring circuit I and pH measuring circuit II, respectively, giving rise to inconvenience of increased component parts and costs as much, as well as increased circuit area. This point remains unchanged even when the dissolved oxygen probe 31 and current-voltage converter circuit 34 are replaced with the conductivity probe and conductivity-voltage converter circuit.

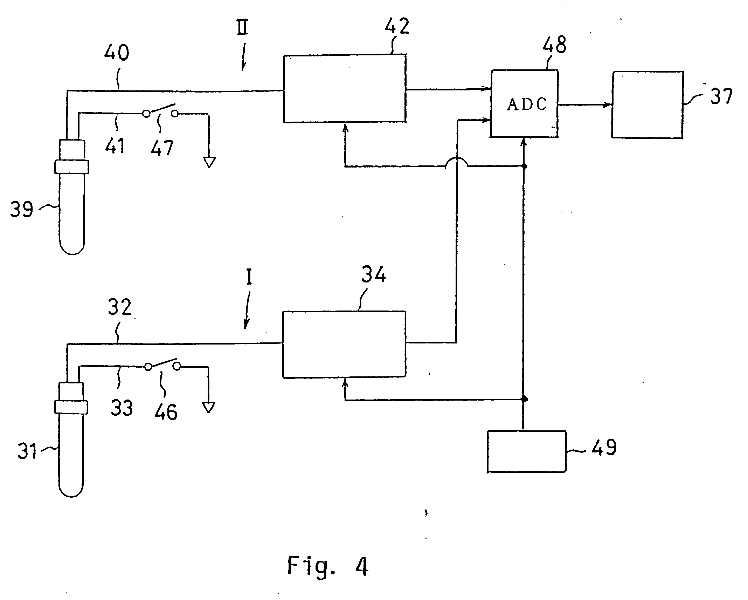

As against this, as shown in FIG. 4, there is a configuration in which switches 46, 47 are intermediately installed to one of the cable signals 33, 41 connected to the dissolved oxygen probe 31 and pH probe 39, respectively, and the switch 47 is turned off (open condition) to isolate the pH probe 39 when the dissolved oxygen is measured, and the switch 46 is turned off to isolate the dissolved oxygen probe 31 when the pH is measured. Numeral 48 designates a A/D converter circuit common for circuits I, II, and numeral 49 designates a power supply for driving the current-voltage converter circuit 34, impedance converter circuit 42, and A/D converter circuit 48, respectively.

In the apparatus configured as shown in FIG. 4 as above, interference and influences of the pH probe 39 in dissolved oxygen measurement and interference and influences of the dissolved oxygen probe 31 in pH measurement can be eliminated, and at the same time, it has another advantage that only one A/D converter circuit 48 or power supply 49 is required, and the configuration can be simplified as much, but it has the following problems.

That is, when the switch 46 is brought to the open state to measure pH, it takes time to stabilize the potential at the dissolved oxygen probe 31 when the switch 47 is being open and the switch 46 is being closed to measure the dissolved oxygen for the next time, constituting an inconvenience that the responsibility is lowered as much.

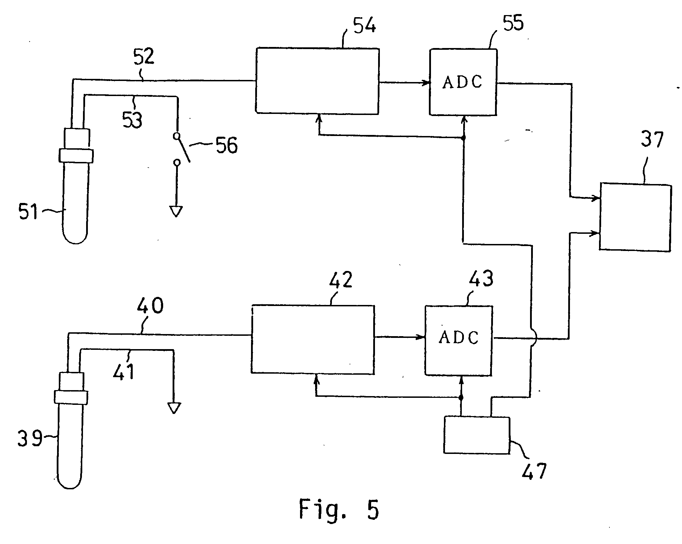

In the conductivity meter shown in FIG. 5, a switch 56 is intermediately installed to the signal cable 53 connected to the conductivity probe 51 so that the conductivity probe 51 can be isolated by turning off the switch 56 during pH measurement. In the apparatus configured as shown in FIG. 5, it is possible to evade the interference and influences in pH measurement and at the same time, it has an advantage that only one power supply 47 is required for driving the conductivity-voltage converter circuit 54, A/D converter circuit 55, impedance converter circuit 52, and A/D converter circuit 43, respectively, and the configuration can be simplified as much, but it has the following problems.

That is, in general, when the switch 56 is electrically controlled, a switch of semiconductors (for example, analog switch) is used in place of the relay switch operating on the electromagnet in order to reduce the power consumption, but when the switch 56 is turned on to measure the conductivity, the ON resistance exerts influence as errors on the measurement results obtained by the conductivity measurement. This error can be cancelled by properly disposing of the processor and display unit 37 but constitutes a problem of complicated processing.

Prior art document US-A-5,103,179 discloses an apparatus for measuring the conductivity, the dissolved oxygen content, and the pH of a sample, using immersible probes. To prevent cross-talk between active probes, such as the dissolved oxygen probe and the conductivity probe, and passive probes, such as the pH electrode, the probes are operated only in sequence, and when not in use are electrically isolated from the measuring system.

Further, prior art document US-A-4,921,582 describes a system for measuring dissolved oxygen in a fluid which employs a galvanic electrode operated in a transient mode. In operation, the galvanic electrode is intermittently coupled and decoupled, under computer control, to and from a sampling system. The sampling system samples the transient current which results from the intermittency, and generates a current-time curve.

### SUMMARY OF THE INVENTION

It is an object of the present invention to provide an apparatus for measuring dissolved oxygen and pH which can eliminate mutual interference and influences and can accurately measure pH and dissolved oxygen when the dissolved oxygen probe and the pH probe are immersed in the same sample.

To solve this object the present invention provides an apparatus as specified in claim 1.

The apparatus of the invention is designed to isolate the pH probe from the reference potential when the dissolved oxygen is measured and to isolate the dissolved oxygen probe from the reference potential while electrodes are short-circuited in this isolated dissolved oxygen probe when pH is measured in said apparatus for measuring dissolved oxygen and pH which can immerse the dissolved oxygen probe and pH probe in the same sample, and can selectively measure the dissolved oxygen amount or pH by the relevant probe.

In the apparatus for measuring dissolved oxygen and pH of said configuration, interference and influences by the pH probe can be eliminated by isolating the pH probe from the reference potential when the dissolved oxygen is measured.

In measuring pH, the dissolved oxygen probe is isolated from the reference potential and at the same time the electrodes are short-circuited in the isolated dissolved oxygen probe. Because the dissolved oxygen probe is isolated from the reference potential, interference and influences by the dissolved oxygen probe can be eliminated. When dissolved oxygen is measured from the condition in which the dissolved oxygen probe is isolated from the reference potential to measure pH, because the electrodes in the isolated dissolved oxygen probe are shortcircuited, the potential in the dissolved oxygen probe is quickly stabilized, and the dissolved oxygen measurement can be obtained quickly as much.

In a further embodiment of the invention described in claim 2, a conductivity probe is included in the apparatus to allow measurement of conductivity as well as pH and dissolved oxygen. To overcome any interference from the conductivity probe, the following measures were adopted:

One of the two signal cables connected to the said conductivity probe is connected to a conductivity-voltage converter circuit for measuring the current flowing into the conductivity probe, while a non-inverting type OP AMP (operation amplifier) output side is connected to the other of said signal cable via a first switch, and a second switch that can be turned ON or OFF simultaneously with the first switch is installed between the inverting input terminal of this non-inverting type OP AMP and the other signal cable, and furthermore, the reference potential is connected to the non-inverting input terminal of the non-inverting type OP AMP apparatus.

In this case. since the output impedance can be reduced as small as possible to turn on the switch, even if the switch is formed with the semiconductor such as analog switch, etc., the influences caused by ON resistance exerted in conductivity measurement become nearly negligible.

During measurement of pH and dissolved oxygen, said both switches are turned OFF (open). With this operation, the conductivity probe is isolated from the pH measuring circuit, and interference and influences are eliminated.

### BRIEF DESCRIPTION OF THE DRAWINGS

FIG. 1 schematically shows a first embodiment of the apparatus for measuring dissolved oxygen or pH according to this invention;
FIG. 2 schematically shows a second embodiment of the apparatus for measuring three items of dissolved oxygen, conductivity and pH according to this invention;
FIG. 3 schematically shows a conventional apparatus for measuring dissolved oxygen or pH;
FIG. 4 schematically shows another conventional apparatus for measuring dissolved oxygen or pH; and
FIG. 5 schematically shows another conventional apparatus for measuring dissolved oxygen or pH.

### DETAILED DESCRIPTION OF THE PREFERRED EMBODIMENTS

Referring now to drawings, there are shown preferred embodiment of the first modification of the invention.

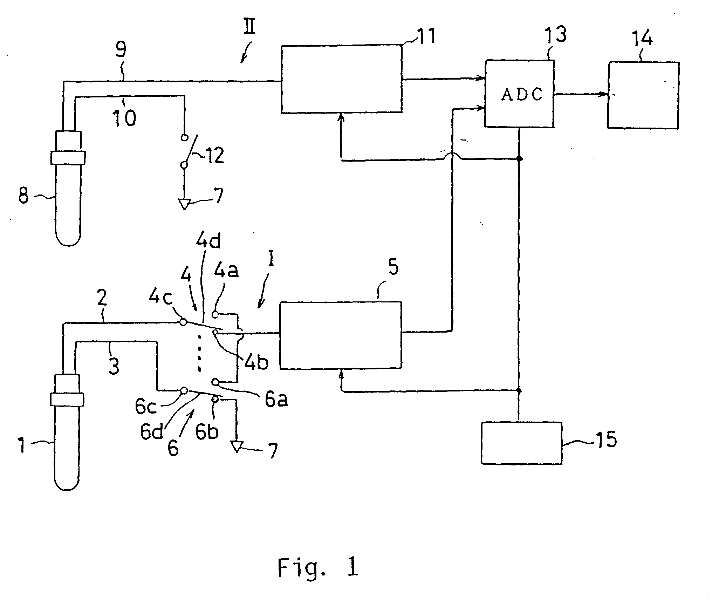

FIG. 1 shows the first embodiment of this invention, and in FIG. 1, numerals I and II designate dissolved oxygen measuring circuit and pH measuring circuit, respectively. First of all, the configuration of the dissolved oxygen measuring circuit I is described. This dissolved oxygen measuring circuit I is designed to measure the current of the dissolved oxygen probe 1, and to the circuit, two signal cables 2, 3 are connected. To one of the signal cable 2, a current-voltage converter circuit 5 is connected via a first selector switch 4.

More specifically, the first selector switch 4 comprises an "a" contact terminal 4a, "b" contact terminal 4b, terminal 4c, and switching piece 4d. The terminal 4c is connected to the signal cable 2 and the "a" contact terminal 4a is connected to the "a" contact terminal 6a of the second selector switch 6 later described, while the "b" contact terminal 4b is connected to the current-voltage converter circuit 5.

To the other signal cable 3, a reference potential 7 is connected via a second selector switch 6. More specifically, the second selector switch 6 comprises an "a" contact terminal 6a, "b" contact terminal 6b, terminal 6c, and switching piece 6d. The terminal 6c is connected to the signal cable 3 and the "a" contact terminal 6a is connected to the "a" contact terminal 4a of the first selector switch 4, while the "b" contact terminal 6b is connected to the reference potential 7. This reference potential 7 is the reference potential of the whole circuit, and is equivalent to the input reference potential of the A/D converter circuit 13 later described.

The selector switches 4, 6 operate as follows. That is, when the section 4d of the first selector switch 4 comes in contact with the "b" contact terminal 4b to connect the dissolved oxygen probe 1 to the current-voltage converter circuit 5 via the signal cable 2, the section 6d of the second selector switch 6 is designed to come in contact with the "b" contact terminal 6b to apply the reference potential 7 to the dissolved oxygen probe 1 via the signal cable 3, and when the section 4d comes in contact with the "a" contact terminal 4a and the dissolved oxygen probe 1 is isolated from the current-voltage converter circuit 5, the section 6d comes in contact with the "a" contact terminal 6a and the dissolved oxygen probe 1 is isolated from the reference potential 7 and is changed over in such a manner to short the two electrodes (not illustrated) in the dissolved oxygen probe 1. This change-over operation takes place on the basis of the commands from the processor and control unit 14 later discussed.

Next discussion will be made on the configuration of the pH measuring circuit II. Numeral 8 designates a pH probe, to which two signal cables 9, 10 are connected. To one of the signal cable 9, an impedance converter circuit 11 is connected. The other signal cable 10 is connected to the reference potential 7 via the switch 12.

A numeral 13 designates an A/D converter circuit used in common for the dissolved oxygen measuring circuit I and the pH measuring circuit II, and though it is not illustrated in detail, on its input side, a selector switch (for example, analog multiplexer) is installed, and is designed to convert the analog signal from both circuits I and II alternatively into digital signal, and output to the processor and control unit 14. The processor and display unit 14 comprises, for example, a microcomputer, has capabilities to process the inputted signals, display processing results, and store then in memory, as well as has various control capabilities.

Numeral 15 designates the power supply, which drives the current-voltage converter circuit 5, impedance converter circuit 11, A/D converter circuit 13, etc.

Description will be made on the operation of the apparatus for measuring dissolved oxygen and pH which is configured as described above. Now, assume that the dissolved oxygen probe 1 and the pH probe 8 are simultaneously immersed in the same sample not illustrated. When pH is measured under this kind of condition, the switch 12 in the pH measuring circuit II is turned ON (closed) and the reference potential 7 is connected to the pH probe 8. On the other hand, in the dissolved oxygen measuring circuit I, the first switch 4 and the second switch 6 are changed over, and the terminals 4c, 6c and the "a" contacts 4a, 6a are connected, respectively to isolate the dissolved oxygen probe 1 from the pH measuring circuit II, and at the same time to short two electrodes in the isolated dissolved oxygen probe 1.

Under the above condition, the output signal from the pH probe 8 is inputted into the A/D converter circuit 13 via the impedance converter circuit 11 and the converted output is inputted into the processor and control unit 14, and the pH results of the sample are thereby obtained. In this event, since the dissolved oxygen probe 1 is isolated from the pH measuring circuit II, interference and influences by the dissolved oxygen probe 1 on the pH measurement are eliminated, and highly accurate measurement is achieved.

When dissolved oxygen is measured, the switch 12 in the pH measuring circuit II is turned OFF (opened) to isolate the pH probe 8 from the dissolved oxygen measuring circuit I. On the other hand, in the dissolved oxygen measuring circuit I, the first switch 4 and the second switch 6 are changed over, the terminals 4c, 6c and "b" contacts 4b, 6b are connected, respectively to connect the dissolved oxygen probe 1 to the current-voltage converter circuit 5, and at the same time to apply the reference potential 7 to the dissolved oxygen probe 1.

Under the above condition, the output signal from the dissolved oxygen probe 1 is inputted to the A/D converter circuit 13 via the current-voltage converter circuit 5, and the converted output is inputted into the processor and control unit 14, and the amount of dissolved oxygen in the sample is thereby able to be obtained. In this event, since the pH probe 8 is isolated from the dissolved oxygen measuring circuit I, interference and influences on the dissolved oxygen measurement by the pH probe 8 are eliminated, and highly accurate measurement takes place. When the dissolved oxygen measurement condition is achieved, it is possible to obtain the dissolved oxygen measurements at a high response rate because the dissolved oxygen probe 1 is shorted when pH is measured.

In the above embodiment, because only one A/D converter circuit 13 is required and at the same time, only one power supply 15 is required for driving the current-voltage converter circuit 5, impedance converter circuit 11, and A/D converter circuit 13, the whole circuit configuration can be simplified, and the circuit can be downsized.

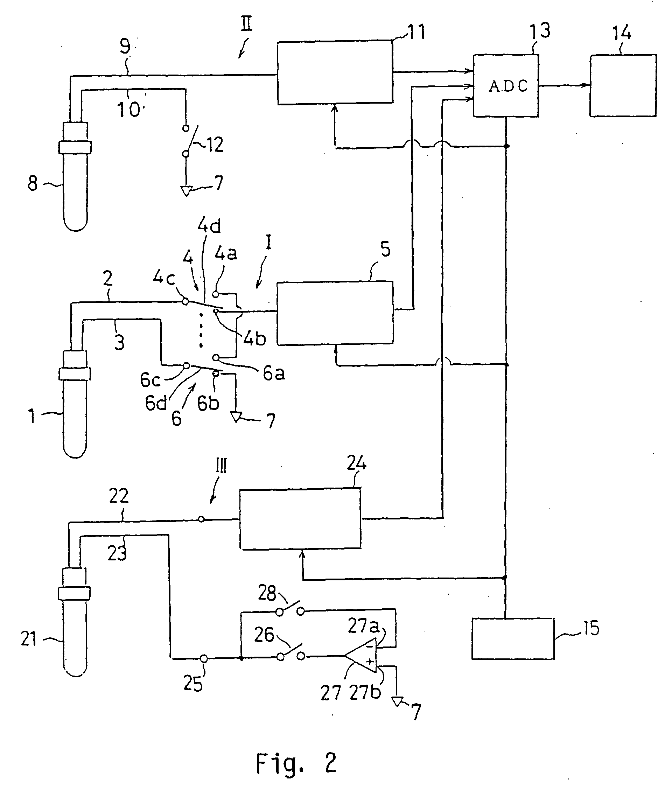

FIG. 2 shows a second embodiment of the invention in which a conductivity probe (21) has been included in the apparatus to allow measurement of conductivity as well as pH and dissolved oxygen.

In FIG. 2, numeral III designates the conductivity measuring circuit. Since the members carrying the like reference characters in FIG. 1 designate like or corresponding members, the detailed description thereof is omitted. Now the description is made on the configuration of the conductivity measuring circuit III. This conductivity measuring circuit III is configured to measure the current that flows when the specified voltage is applied to the conductivity electrode. That is, numeral 21 designates the conductivity probe, to which two signal cables 22, 23 are connected. To one signal cable 22, a conductivity-voltage converter circuit 24 comprising, for example, a constant voltage current-voltage converter circuit for measuring the current flowing in the conductivity probe 21 is installed.

The other signal cable 23 is connected to the terminal 25 for providing the reference voltage dedicated to the conductivity measurement, and to this terminal 25, the output side of the nonreversible type OP AMP 27 is connected via the first switch 26 comprising, for example, an analog switch. Between the non-inverting input terminal 27a of this non-inverting type OP AMP 27 and the terminal 25, the second switch 28 which is turned ON or OFF simultaneously with the first switch 26 is intermediately installed. The non-inverting input terminal 27b of the non-inverting type OP AMP 27 is connected to the reference potential 7 common to the whole circuit. The ON-OFF switching control of the first switch 26 and the second switch 28 is carried out on the basis of the commands from the processor and control unit 14.

In this apparatus, the power supply 15 drives the conductivity-voltage converter circuit 24, impedance converter circuit 11, A/D converter circuit 13, etc.

The operation of the apparatus configured as above is described. Now, assume the conductivity probe 21, the pH probe 8 and the dissolved oxygen probe (1) are simultaneously immersed in the same sample not illustrated. When pH is measured under this condition, the first switch 26 and the second switch 28 are turned OFF (open condition). With this operation, the conductivity probe 21 is isolated from the pH measuring circuit II. The output signal from the pH probe 8 is inputted into the A/D converter circuit 13 via the impedance converter circuit 11, and the converted output is inputted into the processor and control unit 14, and the pH results of the sample is thereby obtained. In this event, since the conductivity probe 21 is isolated from the pH measuring circuit II, interference and influences caused by the conductivity probe side on the pH measurement are eliminated, and highly accurate measurement takes place.

When the conductivity is measured, switches 26, 28 are turned ON (closed condition). With this operation, the specified reference potential is applied to the conductivity probe 1. The current that flows when this specified voltage is applied is converted into voltage in the conductivity-voltage converter circuit 24, and after it is further A/D converted, it is inputted into the processor and control unit 14, and the conductivity of the sample is determined. In this event, by turning the switches 26, 28 ON since it is possible to turn on the switch with the output impedance held as small as possible by bringing the voltage of the terminal 25 to the level same as that of the reference potential 7 by the action of the non-inverting type OP AMP 27, the influence of the ON resistance of the switch 26 (voltage drop caused by minor current flowing the switch 28 can be ignored because the input impedance of the reverse input terminal 27a is high) can be brought to the nearly negligible level, and highly accurate measurement can be carried out.

In the above apparatus, since only one A/D converter circuit 13 is required as well as only one power supply 15 for driving the conductivity-voltage converter circuit 24, impedance converter circuit 11, and A/D converter circuit 13 is required, the whole circuit configuration can be simplified, and the circuit area can be reduced.

Because the non-inverting type OP AMP 27 is intermediately installed to one signal cable 23 of the conductivity probe 21 as described above, the measurement is scarcely subject to the ON resistance when switches 26, 28 are turned ON, and consequently, it is possible to reduce the consumption power using the analog switch with comparatively large ON resistance of switches 26, 28, but relay switches with small ON resistance may be used for switches 26, 28.

When the input impedance of the inverting input terminal 27a of the said OP AMP 27 is significantly high, said switch 28 may be omitted. When the switch 28 is installed as in the case of the present apparatus, it is the old trick to connect input. terminals 27a to 27b of OP AMP 27 at high resistance.

By connecting as shown in FIG. 3, interference and influences caused by the conductivity probe 21 and pH probe 8 can be eliminated by isolating the conductivity probe 21 and pH probe 8 from the reference potential 7 when the dissolved oxygen is measured. Interference and influences caused by the dissolved oxygen probe 1 and the conductivity probe 21 can be eliminated by isolating the dissolved oxygen probe 1 and the conductivity probe 21 from the reference potential 7 when the pH is measured. In addition, interference and influences caused by the dissolved oxygen probe 1 and the pH probe 8 can be eliminated by isolating the dissolved oxygen probe 1 and the pH probe 8 from the reference potential 7 when the conductivity is measured.

Because the signal cables 2, 3 of the dissolved oxygen probe 1 are short-circuited with the dissolved oxygen probe 1 isolated from the reference potential 7 in order to measure pH or conductivity, when the circuit is changed over from this condition to the state for carrying out conductivity measurement, the potential in the dissolved oxygen probe 1 can be stabilized quickly when the signal cables 2, 3 of the dissolved oxygen probe 1 are connected to the reference potential 7 and the current-voltage converter circuit 5, respectively, and the dissolved oxygen measurement can be obtained as much.

In addition, even if the first and the second switches 26, 28 connected to the conductivity probe 21 are formed by semiconductors such as analog switches, etc. in measuring the conductivity, influences by the ON resistance of the switches 26, 28 are scarcely exerted on the conductivity measurement, and the measurement can be stabilized as much.

In each of the above-mentioned embodiments and apparatus, for the A/D converter circuit 13, a selector switch is installed on the input side, but in place of this, a selector switch may be installed separately and the A/D converter circuit 13 without the selector switch may be used.

This invention can implement in the form described above and can take the following effects.

Because in the apparatus for measuring dissolved oxygen and pH according to this invention, the pH probe is designed to be isolated from the dissolved oxygen measuring circuit in measuring dissolved oxygen and the dissolved oxygen probe is designed to be isolated from the pH measuring circuit in measuring pH, measurements are free from interference and influences caused by mutual probes, and highly accurate dissolved oxygen measurement or pH measurement can be carried out.

Because in the above apparatus, in measuring pH, the dissolved oxygen probe is not only isolated from the pH measuring circuit but also electrodes in the isolated dissolved oxygen probe are short-circuited, the potential in the dissolved oxygen probe can be quickly stabilized and dissolved oxygen measurement can be carried out quickly as much when the dissolved oxygen probe is changed over from the condition with the dissolved oxygen probe isolated from the reference potential to the dissolved oxygen measurement condition in order to carry out pH measurement.

That is, with this invention, the circuit configuration can be simplified and the inexpensive apparatus as a whole can be obtained.

Similar effects can be achieved with the apparatus for measuring dissolved oxygen, conductivity, and pH.

## Claims

1. Apparatus for measuring dissolved oxygen and pH in a sample, comprising:
a dissolved oxygen probe (1) and a pH probe (8) for immersion in the same sample;
means (6) for isolating the dissolved oxygen probe (1) from a reference potential (7) during measurement with the pH probe (8); and
means (12) for isolating the pH probe (8) from the reference potential during measurement with the dissolved oxygen probe (1);
**characterized by:**
further means (4, 6) for short circuiting the electrodes of the dissolved oxygen probe during measurement with the pH probe (8).

2. Apparatus as in claim 1, comprising additionally:
a conductivity probe (21) for measuring the conductivity of the same sample;
means (22) for connecting the conductivity probe to a conductivity-voltage converter (24); and
means (23) for connecting the conductivity probe to a reference potential (7); wherein:
switching means (25, 26, 27, 28) for isolating the conductivity probe (21) from the reference potential during measurement with the pH probe (8) is constituted by a non-inverting type operational amplifier (27), and first and second switches (26, 28);
the reference potential is connected to the non-inverting input (27b) of the operational amplifier (27);
the conductivity probe (21) is connected to the output of the operational amplifier via the first switch (26) and to the inverting input (27a) of the operational amplifier via the second switch (28); and
the two switches (26, 28) open and close simultaneously.

## Patentansprüche

1. Vorrichtung zum Messen von gelöstem Sauerstoff und des pH-Wertes in einer Probe, welche aufweist:
- eine Sonde (1) für gelösten Sauerstoff und eine pH-Sonde (8) zum Eintauchen in dieselbe Probe;
- eine Einrichtung (6) zum Isolieren der Sonde (1) für gelösten Sauerstoff von einem Bezugspotential (7) während der Messung mit der pH-Sonde (8); und
- einer Einrichtung (12) zum Isolieren der pH-Sonde (8) von dem Bezugspotential während der Messung mit der Sonde (1) für gelösten Sauerstoff,
**dadurch gekennzeichnet,**
**dass** eine weitere Einrichtung (4, 6) zum Kurzschließen der Elektroden der Sonde (1) für gelösten Sauerstoff während der Messung mit der pH-Sonde (8) vorgesehen ist.

2. Vorrichtung nach Anspruch 1, welche zusätzlich aufweist:
- eine Leitfähigkeitssonde (21) zum Messen der Leitfähigkeit derselben Probe,
- eine Einrichtung (22) zum Verbinden der Leitfähigkeitssonde (21) mit einem Leitfähigkeits-Spannungsumwandler (24), und
- eine Einrichtung (23) zum Verbinden der Leitfähigkeitssonde (21) mit einem Bezugspotential (7),
- Schalteinrichtung (25, 26, 27, 28) zum Isolieren der Leitfähigkeitssonde (21) vom Bezugspotential (7) während der Messung mit der pH-Sonde (8), welche gebildet wird von einem nicht invertierenden Operationsverstärker (27) und von ersten und zweiten Schaltern (26, 28),
- wobei das Bezugspotential (7) mit dem nicht invertierenden Eingang (27b) des Operationsverstärkers (27) verbunden ist,
- wobei die Leitfähigkeitssonde (21) mit dem Ausgang des Operationsverstärkers (27) über den ersten Schalter (26) und mit dem invertierenden Eingang (27a) des Operationsverstärkers (27) über den zweiten Schalter (28) verbunden ist und
- wobei die beiden Schalter (26, 28) sich simultan öffnen und schließen.

## Revendications

1. Appareil pour mesurer la teneur en oxygène dissous et le pH dans un échantillon, comprenant :
une sonde à oxygène dissous (1) et une sonde de pH (8) destinées à être immergées dans le même échantillon ;
un moyen (6) destiné à isoler la sonde à oxygène dissous (1) d'un potentiel de référence (7) pendant le déroulement de la mesure avec la sonde de pH (8) ; et
un moyen (12) destiné à isoler la sonde de pH (8) du potentiel de référence pendant le déroulement de la mesure avec la sonde à oxygène dissous (1) ;
**caractérisé par le fait qu'**il comprend :
d'autres moyens (4, 6) destinés à court-circuiter les électrodes de la sonde à oxygène dissous pendant le déroulement de la mesure avec la sonde de pH (8).

2. Appareil selon la revendication 1, comprenant en outre :
une sonde de conductivité (21) destinée à mesurer la conductivité du même échantillon ;
un moyen (22) destiné à raccorder la sonde de conductivité à un transformateur conductivité-tension (24) ; et
un moyen (23) destiné à raccorder la sonde de conductivité à un potentiel de référence (7) ; dans lequel :
des moyens de commutation (25, 26, 27, 28) destinés à isoler la sonde de conductivité (21) du potentiel de référence pendant le déroulement de la mesure avec la sonde de pH (8), sont constitués par un amplificateur fonctionnel de type non inverseur (27) et des premier et second commutateurs (26, 28) ;
le potentiel de référence est raccordé à l'entrée non inverseur (27b) de l'amplificateur fonctionnel (27) ;
la sonde de conductivité (21) est raccordée à la sortie de l'amplificateur fonctionnel par l'intermédiaire du premier commutateur (26) et à l'entrée inverseur (27a) de l'amplificateur fonctionnel par l'intermédiaire du second commutateur (28) ; et
les deux commutateurs (26, 28) s'ouvrent et se ferment simultanément.
